# EUROPEAN PATENT APPLICATION

(11) **EP 4 830 508 A1**
(43) Date of publication of application: **28.10.2026**
(21) Application number: 24906919.6
(22) Date of filing: 24.10.2024
(51) Int. Cl.: A01G 7/00, A01G 17/02, G06Q 50/02

(54) **HARVEST ASSISTANCE SYSTEM, PROCESSING DEVICE, AND COMPUTER PROGRAM**

(30) Priority: 21.12.2023 JP 2023215577
(71) Applicant: KUBOTA CORPORATION, Osaka-shi, Osaka 530-0011 (JP)
(72) Inventor: SASAMOTO, Hirokazu, Sakai-shi, Osaka 590-0908 (JP); HAYAKAWA, Jun, Sakai-shi, Osaka 590-0908 (JP); HIRONAKA, Nao, Sakai-shi, Osaka 590-0908 (JP); TANAKA, Satoshi, Sakai-shi, Osaka 590-0908 (JP); NAMBU, Masahito, Sakai-shi, Osaka 590-0908 (JP); NISHIKORI, Hiroki, Sakai-shi, Osaka 590-0908 (JP); MORIMOTO, Susumu, Sakai-shi, Osaka 590-0908 (JP); OGUMA, Takashi, Sakai-shi, Osaka 590-0908 (JP)
(74) Representative: Cabinet Beau de Loménie
(86) International application number: PCT/JP2024/038024
(87) International publication number: WO 2025/134531

(57) **Abstract**

A harvest support system 1 of the present disclosure includes a first measurement device 2 that measures quality of a fruit item cultivated in a field F, and a management server 8. The management server 8 includes a processing unit 32 that executes processing of acquiring a plurality of types of quality values based on an output of the first measurement device 2, processing of acquiring a plurality of pieces of time-series data in which the plurality of types of quality values are accumulated, respectively, in time series, and processing of obtaining a predicted period predicted to be an optimal harvest time of the fruit item based on the plurality of pieces of time-series data.

## Description

### TECHNICAL FIELD

The present disclosure relates to a harvest support system, a processing device, and a computer program.

The present application claims priority based on Japanese Patent Application No. 2023-215577 filed on December 21, 2023, the entire contents of which are incorporated herein by reference.

### BACKGROUND ART

Patent Literature 1 discloses a measurement device that emits light to an object to be measured, such as a fruit item, and spectroscopically analyzes transmitted light to obtain quality values for sugar content, acidity, and the like of the object to be measured.

### CITATION LIST

### [PATENT LITERATURE]

PATENT LITERATURE 1: Japanese Laid-Open Patent Publication No. 2020-101409

### SUMMARY OF THE INVENTION

A harvest support system of the present disclosure includes a measurement device that measures quality of a fruit item cultivated in a field, and a processing device. The processing device includes a processing unit that executes first processing of acquiring a plurality of types of quality values based on an output of the measurement device, second processing of acquiring a plurality of pieces of time-series data in which the plurality of types of quality values are accumulated, respectively, in time series, and third processing of obtaining a predicted period predicted to be an optimal harvest time of the fruit item based on the plurality of pieces of time-series data.

### BRIEF DESCRIPTION OF DRAWINGS

[FIG. 1] FIG. 1 is a diagram illustrating an example of an overall configuration of a harvest support system according to an embodiment.
[FIG. 2] FIG. 2 is a block diagram illustrating a main part of an agricultural machine.
[FIG. 3] FIG. 3 is a block diagram illustrating an example of a first measurement device.
[FIG. 4A] FIG. 4A is a block diagram illustrating an example of a second measurement device.
[FIG. 4B] FIG. 4B is a sectional view of a second measurement head.
[FIG. 5] FIG. 5 is a block diagram illustrating a configuration example of a management server.
[FIG. 6] FIG. 6 is a flowchart illustrating an example of quality measurement work for fruit items in a field.
[FIG. 7] FIG. 7 is a plan view of the field.
[FIG. 8] FIG. 8 is a flowchart illustrating an example of quality value acquisition processing.
[FIG. 9] FIG. 9 is a diagram illustrating an example of a plurality of pieces of first calibration curve data.
[FIG. 10] FIG. 10 is a diagram illustrating an example of a plurality of pieces of second calibration curve data.
[FIG. 11] FIG. 11 is a diagram illustrating an example of scaling data.
[FIG. 12] FIG. 12 is a diagram illustrating a mode when a processing unit obtains a measured quality value of a fruit item with ID=1.
[FIG. 13] FIG. 13 is a flowchart illustrating an example of prediction processing.
[FIG. 14] FIG. 14 is a diagram illustrating an example of a quality value database.
[FIG. 15] FIG. 15 is a graph illustrating an example of predicted quality values.
[FIG. 16] FIG. 16 is a diagram illustrating a first example of sunny or rainy predictions and predicted precipitations included in environmental prediction information.
[FIG. 17] FIG. 17 is a diagram illustrating a second example of the sunny or rainy predictions and the predicted precipitations included in the environmental prediction information.
[FIG. 18] FIG. 18 is a diagram illustrating a third example of the sunny or rainy predictions and the predicted precipitations included in the environmental prediction information.
[FIG. 19] FIG. 19 is a diagram illustrating an example of a disease risk included in the environmental prediction information.

### DETAILED DESCRIPTION

### [Problems to be solved by the present disclosure]

According to the above measurement device, while current quality of the fruit item can be grasped, a state of future quality cannot be grasped.

Hence, a determination whether a current state of the fruit item is optimal for harvest can be made, but when the current state of the fruit item does not yet reach a state optimal for harvest, it is not possible to perform prediction for an optimal harvest time, e.g., how long a period is required until the state of the fruit item reaches the state optimal for harvest.

### [Advantageous effect of the present disclosure]

According to the present disclosure, it is possible to perform prediction for an optimal harvest time of a fruit item.

First, contents of an embodiment will be listed and described.

### [Solution to problem]

(1) A harvest support system of the present disclosure includes a measurement device that measures quality of a fruit item cultivated in a field, and a processing device. The processing device includes a processing unit that executes first processing of acquiring a plurality of types of quality values based on an output of the measurement device, second processing of acquiring a plurality of pieces of time-series data in which the plurality of types of quality values are accumulated, respectively, in time series, and third processing of obtaining a predicted period predicted to be an optimal harvest time of the fruit item based on the plurality of pieces of time-series data.
   According to the above configuration, it is possible to perform the prediction of the plurality of types of quality values using the plurality of pieces of time-series data, and to obtain the predicted period predicted as the optimal harvest time based on the plurality of types of quality values thus predicted.
   As a result, the predicted period can be output as a prediction result for the optimal harvest time of the fruit item.
(2) It is preferable that, in the harvest support system according to the above (1), the third processing include processing of obtaining predicted quality values of the plurality of types of quality values, respectively, based on the plurality of pieces of time-series data, processing of acquiring environmental prediction information indicating an environmental prediction for the field, and processing of obtaining the predicted period based on the environmental prediction information and the plurality of predicted quality values.
   In this case, it is possible to obtain the predicted period taking into account the environmental prediction information on the field, in addition to the predicted quality values of the fruit item.
(3) It is preferable that, in the harvest support system according to the above (2), when the environmental prediction information includes a predicted value indicating a predicted environmental state, the processing of obtaining the predicted period include processing of obtaining a first period in which the plurality of predicted quality values satisfy a predetermined condition, and also obtaining a second period in which an environmental state is determined as being harvestable based on a comparison result between the predicted value and a predetermined threshold value, and processing of obtaining the predicted period based on the first period and the second period.
   In this case, it is possible to appropriately obtain the predicted period according to a relation between an appropriate period in view of the quality values and an appropriate period in view of the environment.
(4) It is preferable that, in the harvest support system according to the above (3), the processing of obtaining the predicted period based on the first period and the second period include processing of setting, as the predicted period, an overlapping period in which the first period and the second period overlap.
   In this case, it is possible to set, as the predicted period, an appropriate period in view of the environment and the quality values.
(5) Immediately after a period that is not the second period, the state of the field is not favorable due to rain or the like in some cases.
   In this respect, in the harvest support system according to above (4), the processing of obtaining the predicted period based on the first period and the second period may further include processing of, when the period that is not the second period is present immediately before the overlapping period, providing an interval of at least one day between the period that is not the second period and the predicted period.
   This enables the predicted period to be obtained while avoiding a timing at which the state of the field is not favorable.
(6) In the harvest support system according to any one of the above (2) to (5), the environmental prediction information may include at least one of weather information and disease risk information about a disease of the fruit item.
(7) In the harvest support system according to the above (4), the processing of obtaining the predicted period based on the first period and the second period may include processing of, when the overlapping period in which the first period and the second period overlap is absent, setting, as the predicted period, a day closest to the first period in the second period.
   In this case, it is possible to set the predicted period to a timing at which the plurality of predicted quality values are close to a predetermined condition in the second period.
(8) In the harvest support system according to the above (4), the processing of obtaining the predicted period may further include processing of, when the first period is absent, outputting the plurality of predicted quality values to an outside.
   In this case, it is possible to present, to an operator, the plurality of predicted quality values as information necessary for specifying the predicted period.
(9) In the harvest support system according to any one of the above (1) to (8), the measurement device may include a first measurement unit that measures the quality of the fruit item, and a second measurement unit that measures the quality of the fruit item with a different configuration from that of the first measurement unit, and the first processing may include processing of obtaining the plurality of types of quality values when the quality of the fruit item is measured by the first measurement unit based on scaling data indicating correlations between an output of the first measurement unit and a plurality of reference quality values based on an output of the second measurement unit.
   In this case, when measurement accuracy of the second measurement unit is higher than measurement accuracy of the first measurement unit, the outputs of the first measurement unit can be corrected to values equivalent to the quality values from the second measurement unit having higher measurement accuracy than that of the first measurement device, and quality measurement accuracy can be easily enhanced.
(10) It is preferable that in the harvest support system according to the above (1) or (9), the fruit item include a grape.
   The plurality of quality values are considered in specifying the optimal harvest time of the grape. Thus, the present embodiment can be suitably used in specifying the optimal harvest time of the grape.
(11) It is preferable that in the harvest support system according to the above (1) or (10), the plurality of types of quality values include at least two of sugar content, acidity, pH, and polyphenol content ratio.
(12) Further, the present disclosure regarded from another aspect is a processing device that performs processing of supporting harvest of a fruit item cultivated in a field. This processing device includes a processing unit that executes processing of acquiring a plurality of types of quality values based on outputs of a measurement device that measures quality of a fruit item cultivated in the field, processing of acquiring a plurality of pieces of time-series data in which the plurality of types of quality values are accumulated, respectively, in time series, and processing of obtaining a predicted period predicted to be an optimal harvest time of the fruit item based on the plurality of pieces of time-series data.
(13) The present disclosure regarded from another aspect is a computer program for causing a computer to execute processing of supporting harvest of a fruit item cultivated in a field.
   This computer program causes the computer to execute a step of acquiring a plurality of types of quality values based on outputs of a measurement device that measures quality of the fruit item, a step of acquiring a plurality of pieces of time-series data in which the plurality of types of quality values are accumulated, respectively, in time series, and a step of obtaining a predicted period predicted to be an optimal harvest time of the fruit item based on the plurality of pieces of time-series data.

### [Details of embodiments of the present disclosure]

Hereunder, preferred embodiments will be described with reference to the drawings.

Note that at least some of the embodiments described below may be freely combined.

### [Overall configuration of harvest support system]

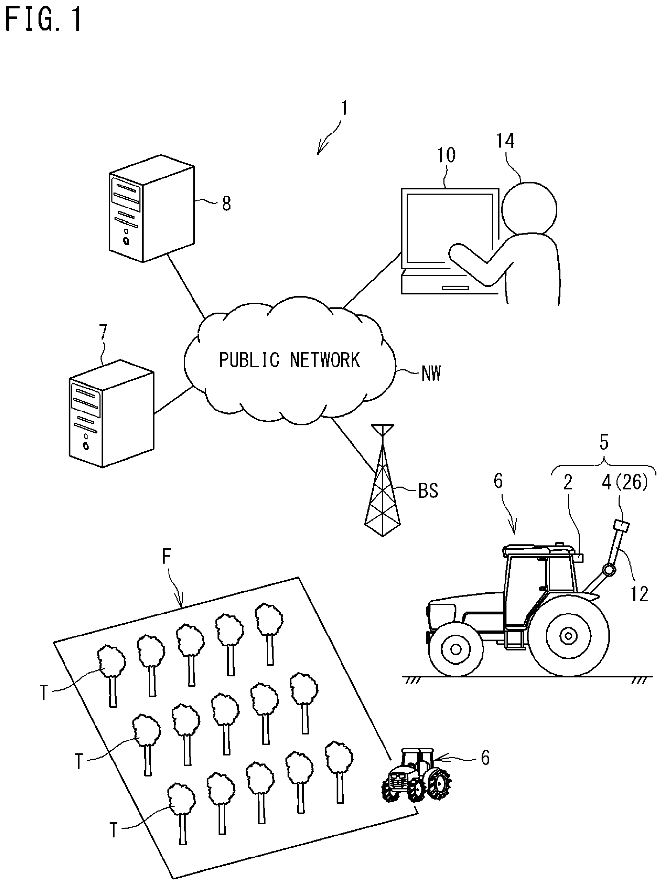

FIG. 1 is a diagram illustrating an example of an overall configuration of a harvest support system according to an embodiment.

In FIG. 1, a harvest support system 1 has a function of measuring quality values of a fruit item of a fruit plant cultivated in a field F. Further, the harvest support system 1 has a function of obtaining a predicted period predicted to be an optimal harvest time of the fruit item.

The field F of the present embodiment is, for example, a vineyard for cultivating grapes to be a raw material for wine. Thus, a plurality of plants T are cultivated in the field F. The plurality of plants T are fruit plants and are grapevines. The plurality of plants T are cultivated in such a way as to make a plurality of rows.

The harvest support system 1 has a function of measuring quality values of fruit items that are bunches of grapes fruiting on the plants T. More specifically, the harvest support system 1 obtains the quality values of the fruit items by analysis using near-infrared light. The quality values of the fruit items are values based on various components representing quality of the fruit items. The quality values include sugar content, acidity, pH, polyphenol, and the like.

The harvest support system 1 includes a measurement device 5, an agricultural machine 6, a management server 8, a management terminal 10, and a weather information server 7.

The measurement device 5 includes a first measurement device 2 (first measurement unit) and a second measurement device 4 (second measurement unit).

The first measurement device 2 and the second measurement device 4 are mounted on the agricultural machine 6.

The first measurement device 2 and the second measurement device 4 are devices that measure the quality of the fruit items. The first measurement device 2 and the second measurement device 4 each have a function of acquiring spectral information in a near-infrared region included in reflected light and transmitted light of the fruit items. The spectral information in the near-infrared region includes information indicating the quality values of the fruit items. Thus, the first measurement device 2 and the second measurement device 4 output the spectral information in the near-infrared region as quality measurement results. The first measurement device 2 and the second measurement device 4 will be described in detail later.

The harvest support system 1 further includes a manipulator 12. The manipulator 12 has a function of moving a second measurement head 26 (described later) included in the second measurement device 4.

The agricultural machine 6, the management server 8, and the management terminal 10 are communicably connected to each other via a public network NW, such as the Internet.

The agricultural machine 6 has, for example, a communication function using a mobile communication system. The agricultural machine 6 is connected to the public network NW via a radio base station BS of the mobile communication system.

The management server 8 has a function of performing processing of obtaining the quality values of the fruit items based on the output of the first measurement device 2 and the output of the second measurement device 4.

The management terminal 10 is a terminal operated by an operator 14 of the harvest support system 1. The management terminal 10 has a function of accepting an operation on the harvest support system 1 by the operator 14 and a function of outputting, to the operator 14, the quality values and the like obtained by the management server 8.

The weather information server 7 collects and accumulates weather information issued from the Meteorological Agency or the like. The weather information includes weather prediction information. The weather prediction information includes sunny or rainy predictions, predicted precipitations, predicted temperatures, and predicted humidity in a period of about 1 week to 10 days.

The weather information server 7 presents necessary information to the management server 8 and the management terminal 10 in response to requests from the management server 8 and the management terminal 10.

The agricultural machine 6 is, for example, a tractor. The agricultural machine 6 can travel in the field F. The agricultural machine 6 can travel between the rows of the plurality of plants T in the field F and move close to all the plants T in the field F. The agricultural machine 6 can travel in the field F by manual driving by an operation of a worker, or can travel in the field F by autonomous driving based on a control command from the management server 8 or a control command from the management terminal 10 based on an input of the operator 14.

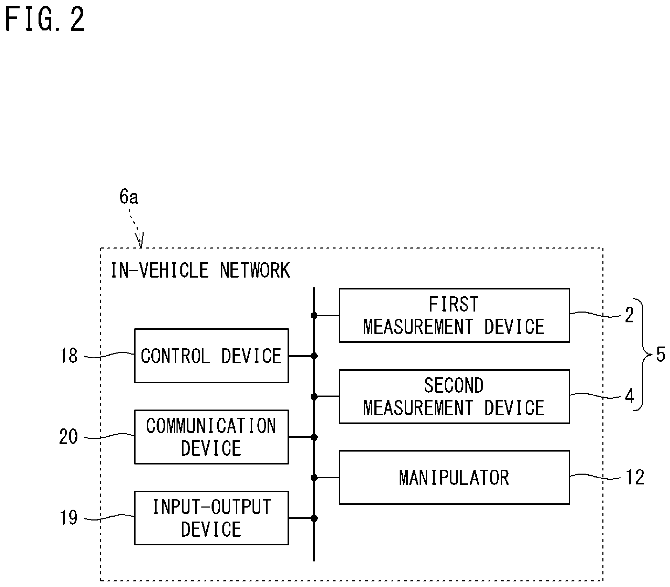

FIG. 2 is a block diagram illustrating an in-vehicle network of the agricultural machine 6.

The agricultural machine 6 includes an in-vehicle network 6a conforming to a communication standard, such as a controller area network (CAN). The in-vehicle network 6a includes a control device 18, an input-output device 19, and a communication device 20.

The communication device 20 has a function as a mobile terminal in the mobile communication system. Thus, the communication device 20 performs radio communication with the radio base station BS.

The control device 18 is an electronic control unit (ECU) that controls a traveling system and a work system of the agricultural machine 6. The control device 18 controls each unit of the agricultural machine 6 based on a driving operation of the worker.

The control device 18 is connected to the public network NW via the communication device 20. Thus, the control device 18 is connected to the management server 8 and the management terminal 10 so as to be communicable to each other. The control device 18 exchanges necessary information with the management server 8 and the management terminal 10 via the public network NW.

When the agricultural machine 6 is capable of the autonomous driving, the control device 18 controls cameras and sensors that recognize surroundings of the agricultural machine 6, and a drive system and a steering system of the agricultural machine 6, and performs processing of executing the autonomous driving, based on the control command from the management server 8 or the management terminal 10, or the like.

The input-output device 19 has a function of accepting the operation of the worker and a function of outputting information and the like to the worker.

The first measurement device 2, the second measurement device 4, and the manipulator 12 are connected to the in-vehicle network 6a.

The first measurement device 2, the second measurement device 4, and the manipulator 12 are connected to the public network NW by the communication device 20. Thus, the first measurement device 2, the second measurement device 4, and the manipulator 12 are connected to the management server 8 and the management terminal 10 so as to be communicable to each other.

This allows the first measurement device 2, the second measurement device 4, and the manipulator 12 to provide necessary information to the management server 8 and the management terminal 10.

The first measurement device 2, the second measurement device 4, and the manipulator 12 are controllable by the management server 8 and the management terminal 10.

### [First measurement device 2 and second measurement device 4]

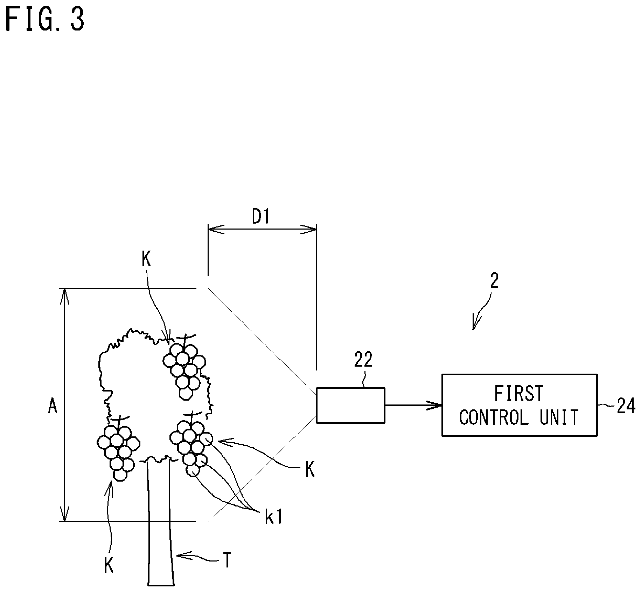

FIG. 3 is a block diagram illustrating an example of the first measurement device 2.

As described above, the first measurement device 2 is a device that measures the quality of the fruit items, and outputs the spectral information in the near-infrared region as the measurement results of the quality.

The first measurement device 2 receives reflected light from the fruit items and outputs spectral information obtained by spectrally separating the received reflected light. Note that the spectral information refers to information indicating a relation between a wavelength and a light intensity in the near-infrared region.

As illustrated in FIG. 3, the first measurement device 2 includes a first measurement head 22 and a first control unit 24.

The first measurement head 22 includes, for example, a hyperspectral camera. The hyperspectral camera is a spectral imaging camera having a plurality of detection wavelength bands in which intensities of light are detectable.

The first measurement head 22 (hyperspectral camera) has the plurality of detection wavelength bands in the near-infrared region. The first measurement head 22 images a predetermined imaging region to acquire a two-dimensional image. That is, the first measurement head 22 receives reflected light when sunlight is emitted to an object present in the imaging region and acquires a two-dimensional image.

Pixels constituting this two-dimensional image have, as luminance, information indicating light intensities in the plurality of detection wavelength bands. Thus, the image acquired by the first measurement head 22 has spectral information in the near-infrared region for each pixel. Hereunder, the image acquired by the first measurement head 22 is also referred to as a spectral image.

In this manner, the first measurement head 22 can acquire the spectral information in the near-infrared region in units of imaging regions.

The first measurement head 22 is used for imaging a fruit item K that is a bunch of grapes being an object to be measured. The first measurement head 22 is a camera capable of imaging a two-dimensional image. Thus, when the fruit item K is imaged by the first measurement head 22, predetermined first spacing D1 is provided between the first measurement head 22 and the fruit item K that is a bunch of grapes.

In the present embodiment, the fruit item K that is a bunch of grapes refers to a clustered aggregate including a plurality of pieces of fruit k1.

An imaging region A of the first measurement head 22 when the first spacing D1 is provided has a size capable of imaging a plurality of the fruit items K scattered on branches and leaves of a single plant T.

Thus, the spectral image imaged by the first measurement head 22 contains the plurality of fruit items K.

The first measurement head 22 outputs the spectral image in which the plurality of fruit items K are imaged. That is, the first measurement head 22 receives reflected light from the plurality of fruit items K and outputs the spectral image.

The first measurement head 22 provides the imaged spectral image to the first control unit 24.

The first control unit 24 is connected to the communication device 20 of the agricultural machine 6. The first control unit 24 has a function of controlling the first measurement head 22 based on a control command provided from the management server 8 or the management terminal 10, or the like. In addition, the first control unit 24 includes an input unit (illustration omitted) that accepts an operation input, and has a function of controlling the first measurement head 22 based on an operation input of the worker.

The first control unit 24 transmits the spectral image provided from the first measurement head 22 to the management server 8. That is, the spectral image acquired by the first measurement head 22 is provided to the management server 8 as an output (measurement result) of the first measurement device 2.

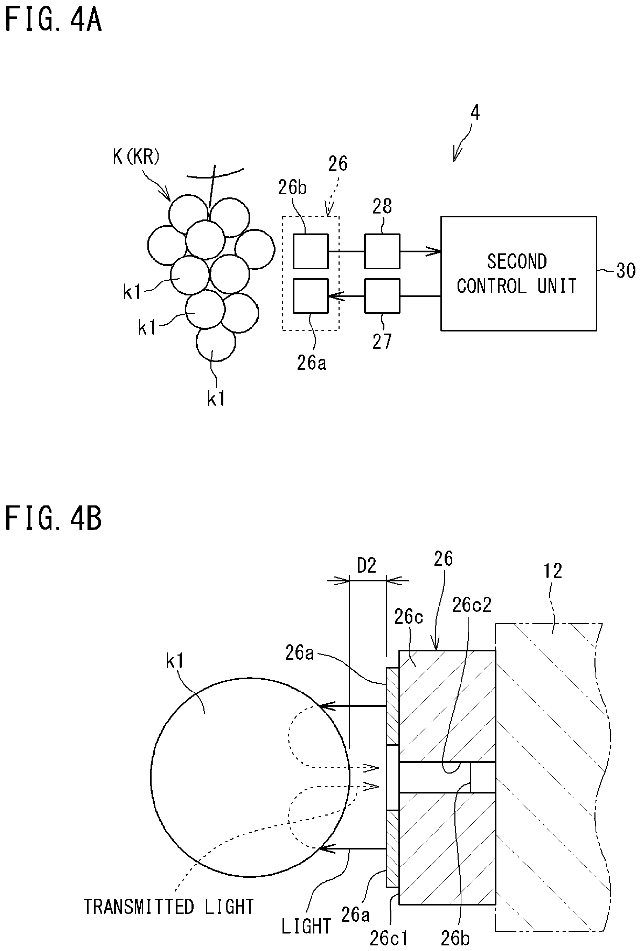

FIG. 4A is a block diagram illustrating an example of the second measurement device 4.

As described above, the second measurement device 4 is a device that measures the quality of the fruit items K, and outputs the spectral information in the near-infrared region as the quality measurement results.

The second measurement device 4 emits light to a fruit item K, receives transmitted light transmitted through the fruit item K, and outputs spectral information obtained by spectrally separating the transmitted light.

As illustrated in FIG. 4A, the second measurement device 4 includes a second measurement head 26, a light source 27, a spectrometer 28, and a second control unit 30.

The second measurement head 26 includes a light projection unit 26a and a light reception unit 26b.

The light projection unit 26a and the light source 27 are connected by optical fiber.

The light source 27 is, for example, a halogen lamp. Light from the light source 27 is guided to the light projection unit 26a of the second measurement head 26 through the optical fiber. The light projection unit 26a emits the light from the light source 27 toward the fruit item K that is an object to be measured.

The light reception unit 26b receives the transmitted light transmitted through the fruit item K. The transmitted light received by the light reception unit 26b is generated when the light from the light projection unit 26a is emitted to the fruit item K.

The light reception unit 26b and the spectrometer 28 are connected by optical fiber. The transmitted light received by the light reception unit 26b is guided to the spectrometer 28 through the optical fiber.

FIG. 4B is a sectional view of the second measurement head 26.

As illustrated in FIG. 4B, the second measurement head 26 has a head body 26c. The head body 26c is an annular member made of resin or the like. The head body 26c is fixed to an end of the manipulator 12.

Thus, the second measurement head 26 can be moved by the manipulator 12.

The light projection unit 26a is provided on an annular end surface 26c1 of the head body 26c. The light projection unit 26a has an annular shape. When the light from the light source 27 is applied to the light projection unit 26a, the light is scattered inside and uniformly emitted from the light projection unit 26a. The light from the light projection unit 26a is emitted to a piece of fruit k1 of the fruit item K to generate transmitted light transmitted through the piece of fruit k1 and reflected light reflected on a surface of the piece of fruit k1.

The light reception unit 26b is provided in a hole 26c2 of the head body 26c. The light reception unit 26b receives the transmitted light passing through the hole 26c2.

Note that the light reception unit 26b mainly receives the transmitted light but also receives the reflected light.

In the measurement of the fruit item K by the second measurement device 4, it is necessary to emit light to the piece of fruit k1 by the light projection unit 26a, so that the second measurement head 26 needs to be brought close to the piece of fruit k1 of the fruit item K.

When the fruit item K is measured by the second measurement device 4, the second measurement head 26 is disposed at a measurement position as illustrated in FIG. 4B. The measurement position illustrated in FIG. 4B refers to a position in which a space between the second measurement head 26 and the piece of fruit k1 corresponds to second spacing D2. The second spacing D2 is shorter than the first spacing D1 (see FIG. 3).

The second measurement head 26 is disposed at the measurement position by the manipulator 12. In this manner, the manipulator 12 functions as a moving mechanism that moves the second measurement head 26 to the measurement position.

When the second measurement head 26 is brought close to the piece of fruit k1 to be disposed at the measurement position, the light from the light projection unit 26a is emitted to the piece of fruit k1.

The light emitted to the piece of fruit k1 is transmitted through the piece of fruit k1 to generate the transmitted light, as indicated by an arrow in FIG. 4B. The transmitted light passes through the hole 26c2 and is received by the light reception unit 26b.

In FIG. 4A, the spectrometer 28 has a function of spectrally separating the transmitted light and a light reception function of converting spectrally separated spectra into signals. When the transmitted light received by the light reception unit 26b is applied, the spectrometer 28 outputs spectral information obtained by spectrally separating the transmitted light.

The spectral information output from the spectrometer 28 is provided to the second control unit 30.

The second control unit 30 is connected to the communication device 20 of the agricultural machine 6. The second control unit 30 has a function of controlling the light source 27 and the spectrometer 28 based on a control command provided from the management server 8 or the management terminal 10. In addition, the second control unit 30 includes an input unit (illustration omitted) that accepts an operation input, and has a function of controlling the light source 27 and the spectrometer 28 based on an operation input of the worker.

The second control unit 30 transmits the spectral information provided from the spectrometer 28 to the management server 8. That is, the spectral information acquired by the spectrometer 28 is provided to the management server 8 as an output (measurement result) of the second measurement device 4.

As described so far, the configuration of the first measurement device 2 and the configuration of the second measurement device 4 are different in presence or absence of the spectral imaging camera, presence or absence of the light source, and the like. While the first measurement device 2 collectively measures the quality of the plurality of fruit items K, the second measurement device 4 measures the quality of one piece of fruit k1.

Here, measurement accuracy for the quality values indicated by the spectral information output from the second measurement device 4 is higher than measurement accuracy for the quality values indicated by the spectral image (spectral information) output from the first measurement device 2.

In the measurement by the second measurement device 4, the second measurement head 26 is brought close to the piece of fruit k1, and the spectral information is acquired from the transmitted light upon emitting the light, so that the measurement is hardly affected by a surrounding environment.

In contrast, in the measurement by the first measurement device 2, the spectral information is acquired from the reflected light of the fruit items K, so that the measurement is easily affected by the surrounding environment.

As a result, the measurement accuracy of the second measurement device 4 is higher than the measurement accuracy of the first measurement device 2.

In the present embodiment, the case where first measurement device 2 and the second measurement device 4 are mounted on the agricultural machine 6 is presented; however, the present invention is not limited thereto. The first measurement device 2 and the second measurement device 4 may be carried by the worker or may be mounted on a truck or the like. Alternatively, only the first measurement device 2 may be mounted on the agricultural machine 6, and the second measurement device 4 may be disposed at a predetermined position. In this case, observation using the first measurement device 2 is performed while going around, and observation using the second measurement device 4 is performed at a fixed point.

### [Management server 8]

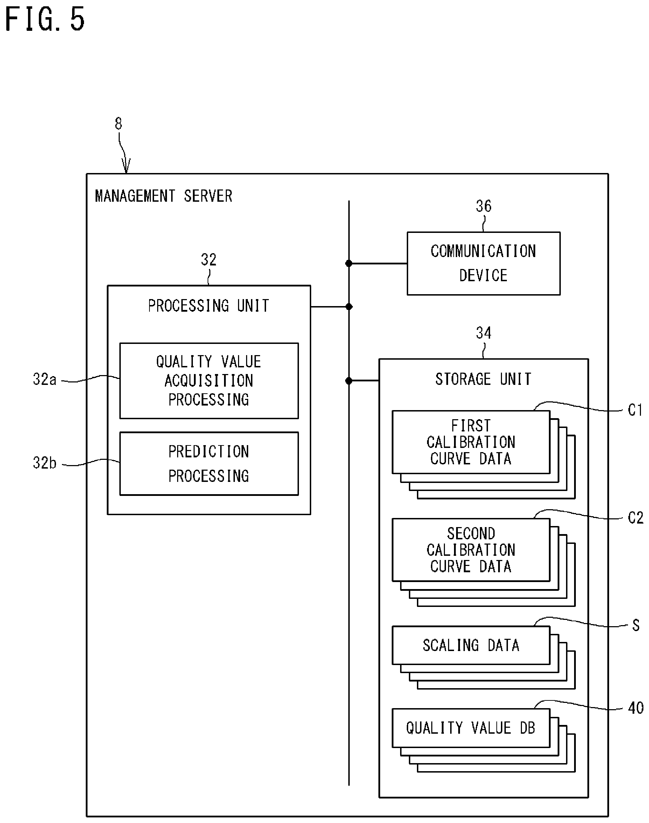

FIG. 5 is a block diagram illustrating a configuration example of the management server 8.

As illustrated in FIG. 5, the management server 8 (processing device) is a type of information processing device including a processing unit 32, a storage unit 34, and a communication device 36.

The communication device 36 is a communication interface capable of communicating with an external device via the public network NW.

The processing unit 32 is, for example, a variety of types of processors adapted to control of a computer, such as a central processing unit (CPU), a graphics processing unit (GPU), a digital signal processor (DSP), and a field programmable gate array (FPGA).

The storage unit 34 is, for example, a flash memory, a hard disk, a read-only memory (ROM), a random-access memory (RAM), or the like.

The storage unit 34 stores a computer program for causing the processing unit 32 to execute the program, and necessary information. The processing unit 32 implements various processing functions of the processing unit 32 by executing computer programs stored in a computer-readable non-transitory recording medium, such as the storage unit 34.

The storage unit 34 also stores a plurality of pieces of first calibration curve data C1, a plurality of pieces of second calibration curve data C2, a plurality of pieces of scaling data S, and a quality value database 40.

The plurality of pieces of first calibration curve data C1 are data for obtaining the quality values (first quality values) based on the output of the first measurement device 2.

The plurality of pieces of second calibration curve data C2 are data for obtaining the quality values (second quality values) based on the output of the second measurement device 4.

The plurality of pieces of scaling data S are data indicating correlations between the first quality values and the second quality values (reference quality values). The plurality of pieces of scaling data S are generated in quality value acquisition processing 32a executed by the processing unit 32.

The quality value database 40 is a database for registering and accumulating measured quality values obtained in the quality value acquisition processing 32a executed by the processing unit 32.

The processing unit 32 has a function of executing the quality value acquisition processing 32a and prediction processing 32b.

The quality value acquisition processing 32a (first processing) is processing of obtaining a measured quality value of a target fruit item KT based on the scaling data S and a first quality value of the target fruit item KT. The target fruit item KT is a fruit item that is a target from which the measured quality value is obtained, among the fruit items K. The measured quality value is a quality value obtained by the quality value acquisition processing 32a, and is the quality value obtained by correcting the first quality value, of the target fruit item KT, obtained based on the output of the first measurement device 2 and enhancing accuracy over that of the first quality value.

The processing unit 32 obtains a plurality of types of the measured quality values based on the outputs of the measurement device 5 (first measurement device 2 and second measurement device 4). The plurality of types of quality values include the sugar content, the acidity, the pH, the polyphenol content ratio, and the like.

The prediction processing 32b includes processing (second processing) of acquiring a plurality of pieces of time-series data in which the plurality of measured quality values obtained by the quality value acquisition processing 32a are accumulated, respectively, in time series, and processing (third processing) of obtaining the predicted period predicted to be an optimal harvest time of the fruit items based on the plurality of pieces of time-series data.

These pieces of processing will be described in detail later.

### [Quality measurement work for fruit items K in field F]

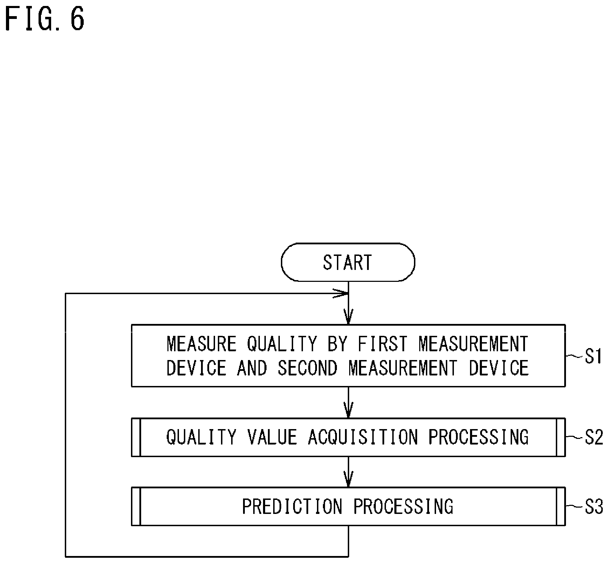

FIG. 6 is a flowchart illustrating an example of quality measurement work for the fruit items K in the field F.

As illustrated in FIG. 6, in the quality measurement work for the fruit items K, first, the quality measurement is performed by the first measurement device 2 and the second measurement device 4 (step S1 in FIG. 6).

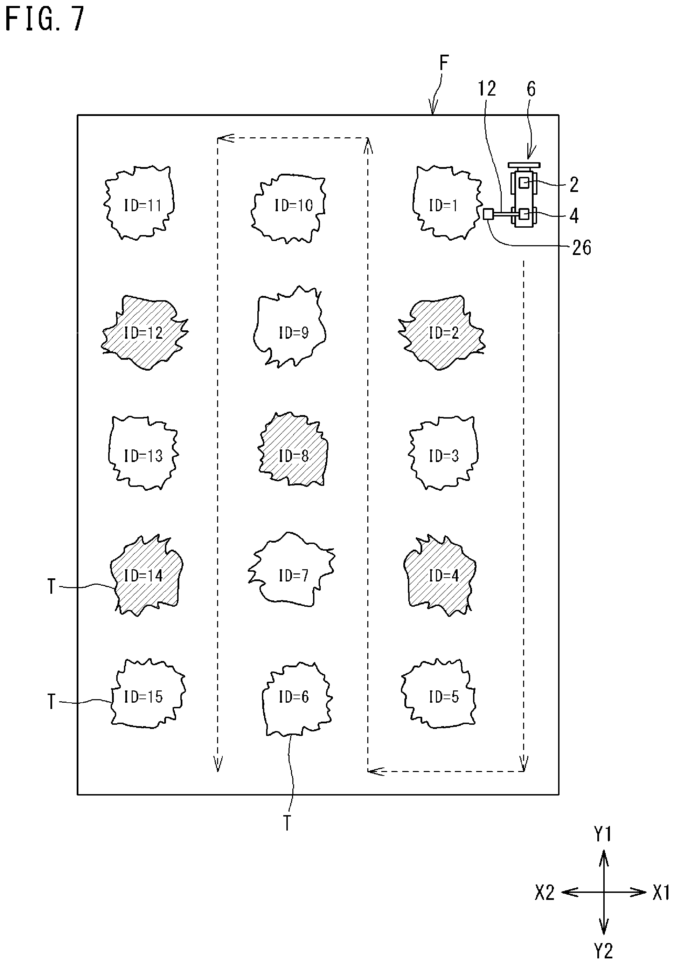

FIG. 7 is a plan view of the field F. In FIG. 7, two directions orthogonal to each other are defined as an X direction and a Y direction. As illustrated in FIG. 7, one direction of the X direction is defined as an X1 direction, and a direction opposite to the X1 direction is defined as an X2 direction. One direction of the Y direction is defined as a Y1 direction, and a direction opposite to the Y1 direction is defined as a Y2 direction.

The quality measurement of the measuring devices 2 and 4 is performed by causing the agricultural machine 6 to travel in the field F.

In the field F illustrated in FIG. 7, for example, a plurality of the plants T (15 plants in the illustrated example) are cultivated. Five plants T are arrayed in the Y direction, and three plants T are arrayed in the X direction. Assuming that the Y direction is a row direction, the plants T are arranged in such a way as to make three rows. One row is composed of five plants T.

The 15 plants T cultivated in the field F are assigned respective IDs as identification information. The 15 plants T are assigned integers from 1 to 15 as the IDs.

The quality measurement work for the fruit items K in the field F is performed on all 15 plants T in the field F.

Among the 15 plants T, hatched plants T (plants T with IDs=2, 4, 8, 12, 14) are plants T of which fruit items K are subjected to the quality measurement by both the first measurement device 2 and the second measurement device 4. The other plants T are plants T of which fruit items K are subjected to the quality measurement only by the first measurement device 2.

That is, the first measurement device 2 performs the quality measurement on the fruit items K of all the plants T, and the second measurement device 4 performs the quality measurement on the fruit items K of some of the plants T in the field F.

The quality measurement by the first measurement device 2 and the second measurement device 4 in step S1 may be performed by an operation of the worker driving the agricultural machine 6, or may be performed by remote control based on commands from the operator 14. When the quality measurement is performed by the worker, the agricultural machine 6 travels by the manual driving of the worker, and the first measurement device 2 and the second measurement device 4 perform the quality measurement by manual operations of the worker. When the quality measurement is performed by the remote control based on the commands from the operator 14, the agricultural machine 6 travels by the autonomous driving, and the first measurement device 2 and the second measurement device 4 perform the quality measurement by control based on the commands from the operator 14.

In the present embodiment, a case where the worker driving the agricultural machine 6 performs the quality measurement is described.

The worker mounts the agricultural machine 6 and travels on the side of the rows of the plurality of plants T in the field F along a broken line in FIG. 7. Thus, the agricultural machine 6 moves close to each plant T in order from the plant T with ID=1. When reaching the side of each plant T, the worker stops the agricultural machine 6, and performs the quality measurement by the first measurement device 2 and the second measurement device 4.

For example, as illustrated in FIG. 7, when the worker stops the agricultural machine 6 on the side (X1 direction side) of the plant T with ID=1, the worker operates the first measurement device 2, contains a plurality of fruit items K of the plant T with ID=1 in an imaging region, and images the plurality of fruit items K. This allows the first measurement device 2 to output a spectral image obtained by imaging the plurality of fruit items K of the plant T with ID=1 and provide the spectral image to the management server 8. At this time, the first measurement device 2 adds the ID of the plant T to the output spectral image and transmits the spectral image. The first measurement device 2 adds the ID of the plant T to the spectral image through an operation input of the worker.

When the output (spectral image) of the first measurement device 2 is provided to the management server 8, the quality measurement for the fruit items K of the plant T with ID=1 ends.

When the quality measurement for the fruit items K of the plant T with ID=1 is completed, the worker moves the agricultural machine 6 in the Y2 direction, and stops the agricultural machine 6 on the side (X1 direction side) of the plant T with ID=2.

Here, the plant T with ID=2 is a plant T of which fruit items K are subjected to the quality measurement by both the first measurement device 2 and the second measurement device 4.

Thus, the worker operates the first measurement device 2, contains a plurality of the fruit items K of the plant T with ID=2 in an imaging region, and images the plurality of fruit items K. This allows the first measurement device 2 to output a spectral image obtained by imaging the plurality of fruit items K of the plant T with ID=2 and provide the management server 8 with the spectral image with the ID of the plant T added.

Further, the worker operates the second measurement device 4 to perform the quality measurement. The worker brings the second measurement head 26 of the second measurement device 4 close to the plant T using the manipulator 12. The worker brings the second measurement head 26 close to one of the fruit items K imaged by the first measurement device 2 among the plurality of fruit items K of the plant T. The worker operates the second measurement device 4 to cause the second measurement device 4 to receive transmitted light from the fruit item K. This allows the second measurement device 4 to output spectral information on the fruit item K of the plant T with ID=2 and provide the spectral information to the management server 8.

In the following description, the fruit item K measured by the second measurement device 4 is also referred to as a reference fruit item KR.

The second measurement device 4 also adds the ID of the plant T to the output spectral image and transmits the spectral image. The second measurement device 4 adds the ID of the plant T to the spectral information through an operation input of the worker.

Further, the second measurement device 4 may add position information indicating a position of the reference fruit item KR to the spectral information through an operation input of the worker.

When the output of the first measurement device 2 and the output of the second measurement device 4 are provided to the management server 8, the quality measurement for the plant T with ID=2 ends.

In the foregoing manner, the worker performs the quality measurement for the fruit items K of the plurality of plants T according to the order of the IDs.

The outputs of the first measurement device 2 and the outputs of the second measurement device 4 (spectral images and pieces of spectral information) are stored in the storage unit 34 of the management server 8.

Thus, the spectral images to which IDs=1 to 15 are added and the pieces of spectral information to which IDs =2, 4, 8, 12, and 14 are added, are stored in the storage unit 34.

When the quality measurement by the first measurement device 2 and the second measurement device 4 is completed, as illustrated in FIG. 6, the quality value acquisition processing by the management server 8 is performed next (step S2 in FIG. 6).

### [Quality value acquisition processing]

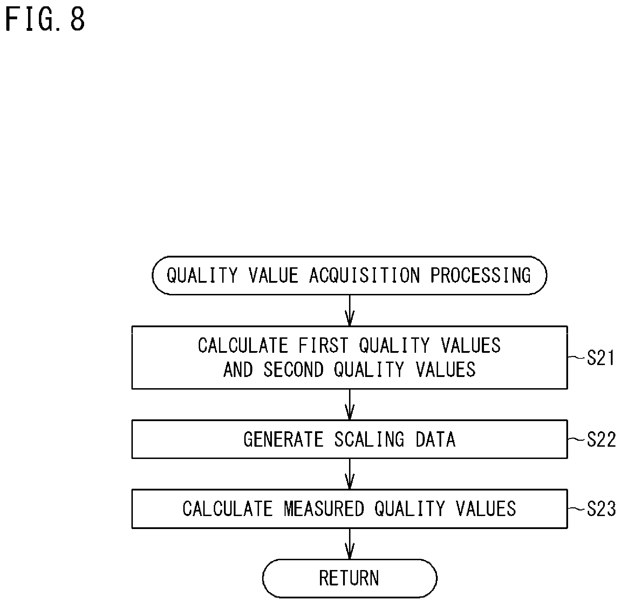

FIG. 8 is a flowchart illustrating an example of the quality value acquisition processing.

In the quality value acquisition processing, each of the measured quality value of the fruit items K of the 15 plants T is obtained.

As illustrated in FIG. 8, first, the processing unit 32 of the management server 8 obtains the first quality value and the second quality value (In FIG. 8, step S21). The processing unit 32 obtains the first quality value based on the output (spectral image) of the first measurement device 2. The processing unit 32 obtains the second quality value based on the output (spectral information) of the second measurement device 4.

The processing unit 32 obtains the first quality value and the second quality value by a technique of spectroscopic analysis using the near-infrared light.

Quantitative analysis by the spectroscopic analysis using the near-infrared light is an analysis method performed by exploiting the fact that a degree of light absorption in a wavelength band in which a certain component remarkably absorbs light, changes according to a content of the certain component.

The processing unit 32 obtains the sugar content, the acidity, the pH, and the polyphenol content ratio as the first quality value and the second quality value.

Wavelength bands in the near-infrared region to be used in analyzing the respective sugar content, acidity, pH, and polyphenol content ratio are set in advance.

First, processing of obtaining the first quality value will be described.

The processing unit 32 obtains a spectrally separated image in the wavelength band relevant to each quality value from the spectral image that is the output of the first measurement device 2. In the present embodiment, the processing unit 32 obtains a spectrally separated image in the wavelength band relevant to the sugar content, a spectrally separated image in the wavelength band relevant to the acidity, a spectrally separated image in the wavelength band relevant to the pH, and a spectrally separated image in the wavelength band relevant to the polyphenol. Note that the spectrally separated images are each an image in which luminance of pixels constituting the image represents light intensities in a predetermined wavelength band.

Hereunder, processing when the processing unit 32 obtains the sugar content used as the first quality value from the spectrally separated image in the wavelength band relevant to the sugar content will be described.

The processing unit 32 identifies image regions of portions of the plurality of fruit items K in the spectrally separated image in the wavelength band relevant to the sugar content. The luminance of pixels contained in the plurality of image regions indicates light intensities in the wavelength band relevant to the sugar content. In other words, the luminance of the pixel indicates an amount of light absorption.

The processing unit 32 obtains a representative value of luminance obtained from one spectrally separated image, based on the luminance of the pixels contained in the image regions of the plurality of fruit items K. For example, the processing unit 32 may use, as the representative value, an average value of the luminance of the pixels contained in the image regions of the plurality of fruit items K.

In addition, a threshold value can be set for the luminance in order to identify the image regions of the portions of the plurality of fruit items K in the spectrally separated image. In this case, the processing unit 32 can identify regions with a value equal to or larger than the threshold value as the image regions of the fruit items K.

When the reference fruit items KR can be identified from the spectrally separated images of the plants T with IDs=2, 4, 8, 12, and 14 by the position information indicating the positions of the reference fruit items KR, the processing unit 32 may obtain a representative value of luminance using pixels contained in image regions of only portions of the reference fruit items KR.

In this case, the luminance of the reference fruit items KR can be obtained.

Next, the processing unit 32 refers to the first calibration curve data C1, and obtains the sugar content based on the luminance (representative value).

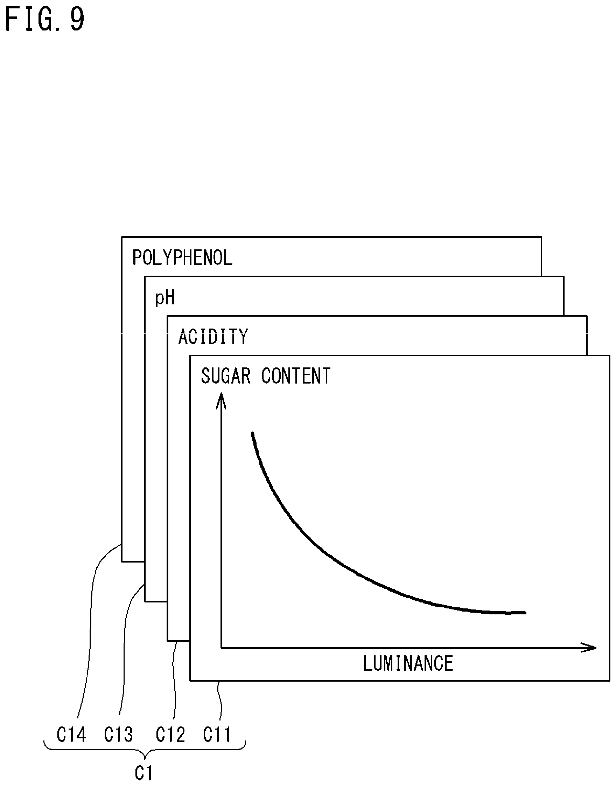

FIG. 9 is a diagram illustrating an example of the plurality of pieces of first calibration curve data C1. FIG. 9 schematically illustrates the first calibration curve data C1. As illustrated in FIG. 9, among a plurality of pieces of first calibration curve data C11 to C14, the first calibration curve data C11 indicates a correlation between the sugar content and the luminance of the pixel of the spectrally separated image in the wavelength band relevant to the sugar content. While being omitted in FIG. 9, the first calibration curve data C12 indicates a correlation between the acidity and the luminance of the pixel of the spectrally separated image in the wavelength band relevant to the acidity. The first calibration curve data C13 indicates a correlation between the pH and the luminance of the pixel of the spectrally separated image in the wavelength band relevant to the pH. The first calibration curve data C14 indicates a correlation between the polyphenol content ratio and the luminance of the pixel of the spectrally separated image in the wavelength band relevant to the polyphenol.

It suffices that the plurality of pieces of first calibration curve data C1 are data with which the first quality values can be obtained from the luminance of the pixels of the spectrally separated images, and the plurality of pieces of first calibration curve data C1 may be tables obtained by an experiment, a simulation, or the like, or may be linear or nonlinear mathematical expressions.

When the sugar content used as the first quality value is obtained, the processing unit 32 refers to the first calibration curve data C11 on the sugar content, and obtains the sugar content relevant to the luminance obtained above. This sugar content is the first quality value.

The processing unit 32 also obtains the acidity, the pH, and the polyphenol content ratio other than the sugar content with a similar technique to the technique for the sugar content.

The processing unit 32 obtains the first quality values (sugar content, acidity, pH, and polyphenol content ratio) of the respective plants T with IDs=1 to 15 based on the outputs of the first measurement device 2 as described above.

Next, processing of obtaining the second quality values will be described.

The processing unit 32 obtains an absorbance of the wavelength band relevant to each quality value from the spectral information that is the output of the second measurement device 4. Note that the absorbance is a value indicating a degree of absorption of light in a predetermined wavelength band with respect to the light of the light source 27.

Hereunder, processing when the processing unit 32 obtains the sugar content using as the first quality value will be described.

The processing unit 32 refers to the second calibration curve data C2, and obtains the sugar content based on an absorbance (representative value).

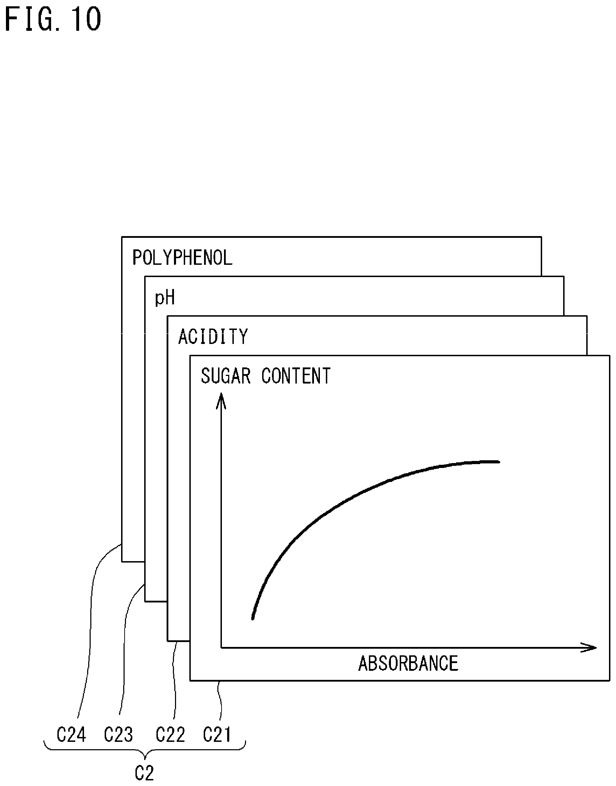

FIG. 10 is a diagram illustrating an example of the plurality of pieces of second calibration curve data C2. FIG. 10 schematically illustrates the second calibration curve data C2. As illustrated in FIG. 10, among a plurality of pieces of second calibration curve data C21 to C24, the second calibration curve data C21 indicates a correlation between the sugar content and the absorbance in the wavelength band relevant to the sugar content. While being omitted in FIG. 10, the second calibration curve data C22 indicates a correlation between the acidity and the absorbance in the wavelength band relevant to the acidity. The second calibration curve data C23 indicates a correlation between the pH and the absorbance in the wavelength band relevant to the pH. The second calibration curve data C24 indicates a correlation between the polyphenol content ratio and the absorbance in the wavelength band relevant to the polyphenol.

It suffices that the plurality of pieces of second calibration curve data C2 are data with which the second quality values can be obtained from the absorbances, and the plurality of pieces of second calibration curve data C2 may be tables obtained by an experiment, a simulation, or the like, or may be linear or nonlinear mathematical expressions.

When the sugar content using as the second quality value is obtained, the processing unit 32 refers to the second calibration curve data C21 on the sugar content, and obtains the sugar content relevant to the absorbance obtained above. This sugar content is the second quality value.

The processing unit 32 also obtains the acidity, the pH, and the polyphenol content ratio other than the sugar content with a similar technique to the technique for the sugar content.

The processing unit 32 obtains the second quality values (sugar content, acidity, pH, and polyphenol content ratio) of the respective plants T with IDs=2, 4, 8, 12, 14 based on the outputs of the second measurement device 4 as described above.

In the foregoing manner, the processing unit 32 obtains the first quality values of the respective plants T with IDs=1 to 15 and the second quality values of the respective plants T with IDs=2, 4, 8, 12, and 14 (step S21 in FIG. 8).

Next, as illustrated in FIG. 8, the processing unit 32 generates the scaling data S (step S22 in FIG. 8).

The scaling data S is obtained based on the first quality values and the second quality values obtained when the reference fruit items KR are measured by both the first measurement device 2 and the second measurement device 4. That is, the scaling data S is obtained based on the first quality values of the respective plants T with the IDs =2, 4, 8, 12, and 14 and the second quality values of the respective plants T with the IDs =2, 4, 8, 12, and 14. Hereunder, the first quality values of IDs =2, 4, 8, 12, and 14 are also referred to as reference first quality values, and the second quality values of IDs =2, 4, 8, 12, and 14 are also referred to as reference second quality values.

The first quality value for each of the plants T with IDs=2, 4, 8, 12, and 14 may be an average of the quality values of the plurality of fruit items K including the reference fruit item KR. Alternatively, the first quality value for each of the plants T with IDs=2, 4, 8, 12, and 14 may include only the quality value of the reference fruit item KR.

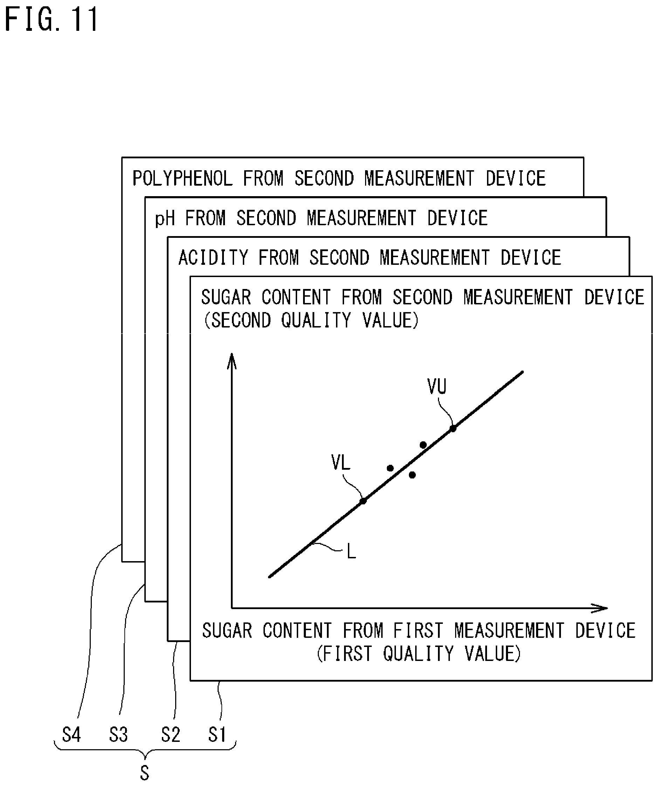

FIG. 11 is a diagram illustrating an example of the scaling data S. As illustrated in FIG. 11, among a plurality of pieces of scaling data S1 to S4, the scaling data S1 indicates a correlation between the sugar content from the first measurement device 2 and the sugar content from the second measurement device 4. While being omitted in FIG. 11, the scaling data S2 indicates a correlation between the acidity from the first measurement device 2 and the acidity from the second measurement device 4. The scaling data S3 indicates a correlation between the pH from the first measurement device 2 and the pH from the second measurement device 4. The scaling data S4 indicates a correlation between the polyphenol content ratio from the first measurement device 2 and the polyphenol content ratio from the second measurement device 4.

The scaling data S1 includes a line chart L indicating a correlation between the sugar content from the first measurement device 2 and the sugar content from the second measurement device 4. In the scaling data S1, the horizontal axis represents the sugar content (first quality value) from the first measurement device 2, and the vertical axis represents the sugar content (second measured value) from the second measurement device 4. The line chart L is a straight line passing through point VU and point VL.

Five points in FIG. 11 are points with which the reference fruit items KR having the reference first quality values and the reference second quality values are plotted.

Among the five points, the point VU is a point of a reference fruit item KR having a maximum value among a plurality of the sugar contents (a plurality of the reference first quality values) from the first measurement device 2 and a maximum value of a plurality of the sugar contents (a plurality of the reference second quality values) from the second measurement device 4. The point VL is a point of a reference fruit item KR having a minimum value among the plurality of sugar contents (the plurality of reference first quality values) from the first measurement device 2 and a minimum value of the plurality of sugar contents (the plurality of reference second quality values) from the second measurement device 4.

As described so far, in the present embodiment, the scaling data S1 is obtained based on the plurality of reference first quality values and the plurality of reference second quality values obtained when the plurality of reference fruit items KR are measured by both the first measurement device 2 and the second measurement device 4. In this case, the first quality values and the second quality values are associated with each other by the plurality of reference fruit items KR. Thus, accuracy of the scaling data S can be further enhanced.

The scaling data S1 is obtained based on the maximum value and the minimum value among the plurality of reference first quality values (outputs of the first measurement device 2) and the maximum value and the minimum value among the plurality of reference second quality values.

In this case, the reference first quality values and the reference second quality values are associated with each other at least based on their maximum values and minimum values. Thus, the scaling data S1 can be easily obtained without deteriorating the accuracy.

The other pieces of scaling data S2 to S4 are obtained similarly to the scaling data S1.

It suffices that the scaling data S is data indicating the correlations between the first quality values (outputs of the first measurement device 2) and the second quality values, and the scaling data S may be tables or mathematical expressions.

In the foregoing manner, the processing unit 32 generates the scaling data S (step S22 in FIG. 8).

Next, as illustrated in FIG. 8, the processing unit 32 calculates the measured quality values (step S23 in FIG. 8).

The processing unit 32 selects target fruit items KT from the fruit items K of the plants T with IDs=1 to 15, and obtains measured quality values of the target fruit items KT based on the scaling data S and the first quality values of the target fruit items KT.

The processing unit 32 sequentially selects the target fruit items KT from the fruit items K of the plants T with IDs=1 to 15 and successively obtains the measured quality values. This allows the processing unit 32 to obtain the measured quality values of the respective fruit items K of the plants T with IDs=1 to 15.

The processing unit 32 refers to the scaling data S and obtains the second quality values corresponding to the first quality values of the target fruit items KT. The processing unit 32 obtains the second quality values corresponding to the first quality values as the measured quality values of the target fruit items KT.

For example, a case of obtaining a sugar content used as a measured quality value of the fruit items K of the plant T with ID=1 will be described.

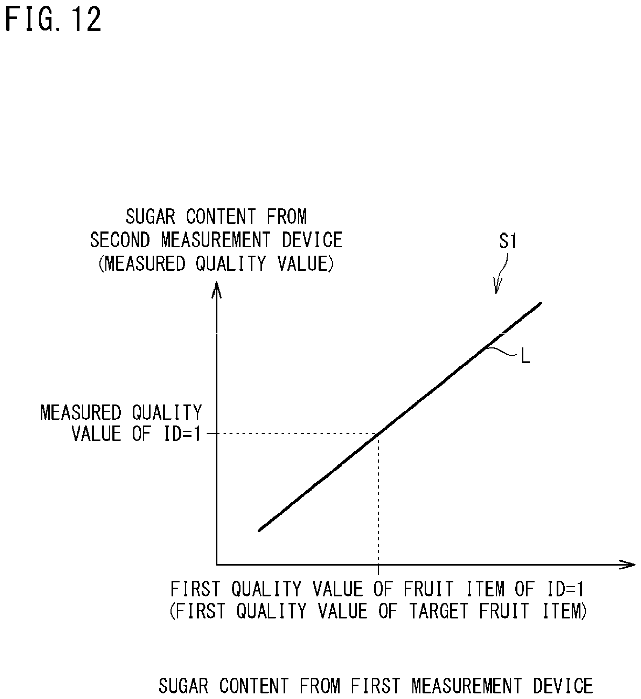

FIG. 12 is a diagram illustrating a mode when the processing unit 32 obtains the measured quality value of the fruit items K of the plant T with ID=1.

The processing unit 32 selects a fruit item K of the plant T with ID=1 as its target fruit item KT. Next, the processing unit 32 refers to the scaling data S1, and obtains a sugar content (vertical axis in FIG. 12) from the second measurement device 4, corresponding to the sugar content (horizontal axis in FIG. 12) that is the first quality value of the fruit item K (target fruit item KT) with ID=1 in the line chart L.

The processing unit 32 sets, as the measured quality value, the sugar content from the second measurement device 4 corresponding to the first quality value.

As described so far, the vertical axis of the scaling data S1 indicates the sugar content from the second measurement device 4 and also indicates the measured quality value obtained from the first quality value.

The processing unit 32 also obtains the measured quality values for the acidity, the pH, and the polyphenol content ratio other than the sugar content with a similar technique to the technique for the sugar content.

The processing unit 32 repeats similar processing on the fruit items K of the plants T with IDs=1 to 15, and obtains the measured quality values of the fruit items K of the respective plants T with IDs=1 to 15.

For the fruit items K of the plants T with IDs=2, 4, 8, 12, and 14 including the reference fruit items KR, the second quality values measured by the second measurement device 4 may be used as the measured quality values as they are.

According to this quality value acquisition processing, the second quality value corresponding to the first quality value (output of the first measurement device) of the target fruit item KT is obtained based on the scaling data S, and the obtained second quality value can be used as the measured quality value of the target fruit item KT.

As a result, the first quality value of the target fruit item KT can be corrected to a value equivalent to the quality value from the second measurement device 4 having higher measurement accuracy than that of the first measurement device 2, and the quality measurement accuracy can be easily enhanced.

In addition, since the first measurement head 22 includes the hyperspectral camera (spectral imaging camera), the first measurement device 2 can perform measurement in a wider area at a time, which enhances convenience, compared with the second measurement device 4 including the light source 27 and the spectrometer 28 that spectrally separates the transmitted light. Hence, it is possible to enhance the convenience using the first measurement device 2 while enhancing the quality measurement accuracy.

In the foregoing manner, the processing unit 32 calculates the measured quality values (step S23 in FIG. 8).

Next, the processing unit 32 proceeds to step S3 in FIG. 6 and executes the prediction processing (step S3 in FIG. 6).

### [Prediction processing]

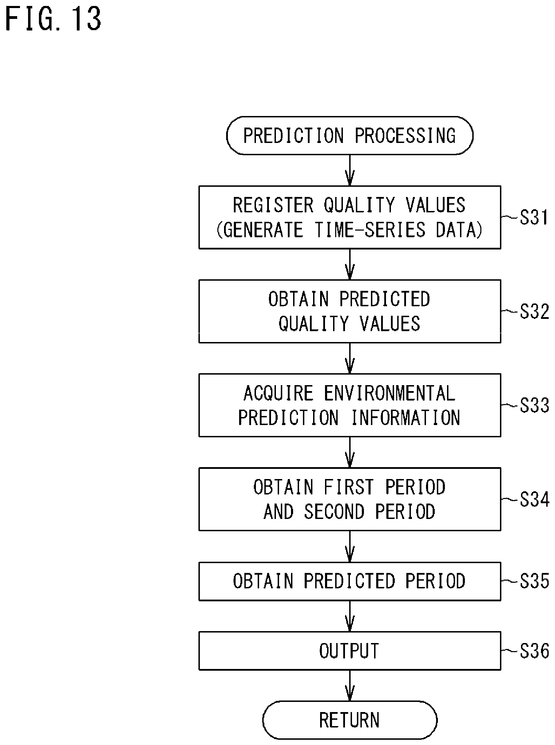

FIG. 13 is a flowchart illustrating an example of the prediction processing.

In the prediction processing, the processing unit 32 of the management server 8 obtains the predicted period predicted to be an optimal harvest time of the fruit items as described above. In the present embodiment, the predicted period is obtained as a period with one day as a minimum unit.

As illustrated in FIG. 13, first, the processing unit 32 registers, in the quality value database 40, the plurality of types of measured quality values (sugar content, acidity, pH, and polyphenol content ratio) acquired by the quality value acquisition processing 32a (step S31 in FIG. 13).

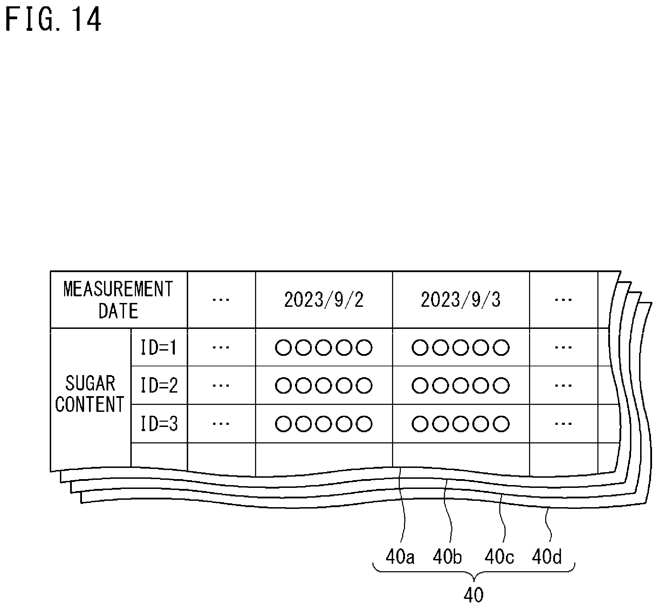

FIG. 14 is a diagram illustrating an example of the quality value database 40.

The quality value database 40 includes a sugar content database 40a, an acidity database 40b, a pH database 40c, and a polyphenol database 40d.

In FIG. 14, the IDs of the plants T and the sugar contents are registered in the sugar content database 40a in association with each other. The sugar contents are registered in time series for each measurement date on which the sugar contents are measured. That is, time-series data in which the sugar contents of the respective plants T are accumulated in time series, is registered in the sugar content database 40a.

The acidity database 40b, the pH database 40c, and the polyphenol database 40d are similar to the sugar content database 40a. Thus, in the acidity database 40b, the pH database 40c, and the polyphenol database 40d, pieces of time-series data (the plurality of pieces of time-series data) on the acidity, the pH, and the polyphenol content ratio of each of the plants T are registered.

The processing unit 32 registers the four kinds of the measured quality values of the sugar contents, the acidity, the pH, and the polyphenol content ratio in the quality value database 40.

That is, the processing unit 32 acquires the four pieces of the time-series data in which the four kinds of the measured quality values are accumulated in time series (second processing).

Next, the processing unit 32 obtains the predicted period based on the plurality of pieces of time-series data (third processing).

More specifically, as illustrated in FIG. 13, the processing unit 32 obtains predicted quality values (step S32 in FIG. 13).

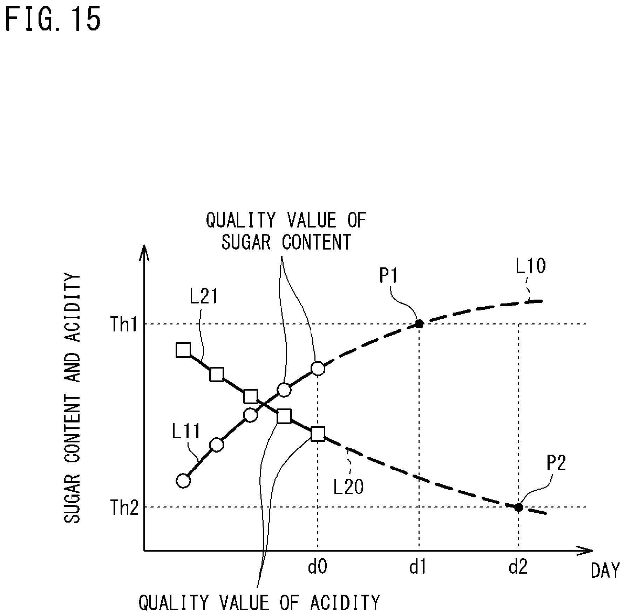

FIG. 15 is a graph illustrating an example of the predicted quality value. FIG. 15 illustrates the time-series data on the sugar content and predicted sugar content, and the time-series data on the acidity and predicted acidity.

In FIG. 15, the horizontal axis indicates the day, and the vertical axis indicates the sugar content and the acidity. In FIG. 15, circles indicate measured values (measured quality values) of the sugar content, and squares indicate measured values (measured quality values) of the acidity.

In the following description, prediction processing when two types of the measured quality values (two pieces of the time-series data) of the sugar content and the acidity are used, will be described.

In the present embodiment, the processing unit 32 obtains an average value of the measured quality values of the entire field F on each measurement day, and uses the average value as a quality value. For example, a value of the sugar content on Day d0 is an average value, measured on Day d0, of the sugar contents of the plants T with IDs=1 to 15. Similarly, a value of the acidity on Day d0 is an average value, measured on Day d0, of the acidity of the plants T with IDs=1 to 15.

The processing unit 32 obtains a prediction curve L10 based on the values of the sugar content (time-series data on the sugar content). For example, the processing unit 32 obtains an approximate curve L11 based on past time-series data on the sugar content before Day d0, and obtains the prediction curve L10 of the sugar content by extending the approximate curve L11 in a direction of future relative to Day d0. The prediction curve L10 indicates predicted values of future sugar contents after Day d0. That is, the prediction curve L10 is the predicted sugar content (predicted quality value).

In addition, the processing unit 32 obtains a prediction curve L20 based on the quality values of the acidity (time-series data on the acidity). For example, the processing unit 32 obtains an approximate curve L21 based on past time-series data on the sugar content before Day d0, and obtains the prediction curve L20 of the acidity by extending the approximate curve L21 in the direction of future relative to Day d0. The prediction curve L20 indicates predicted values of future acidity after Day d0. That is, the prediction curve L20 is the predicted acidity (predicted quality value).

As a method of obtaining the approximate curves, a known method, such as regression analysis using a least squares method, is employed.

In the foregoing manner, the processing unit 32 obtains the prediction curve L10 as the predicted sugar content, and obtains the prediction curve L20 as the predicted acidity.

Next, as illustrated in FIG. 13, the processing unit 32 obtains the environmental prediction information (step S33 in FIG. 13).

The processing unit 32 accesses the weather information server 7 and acquires the environmental prediction information. The environmental prediction information in the present embodiment includes weather information in a period from the present to nine days ahead.

In the present embodiment, the weather information includes sunny or rainy predictions and predicted precipitations in a period from the present to nine days ahead. Note that the predicted precipitation is a predicted value indicating a predicted environmental state.

After acquiring the environmental prediction information, the processing unit 32 proceeds to step S34 and obtains a first period and a second period (step S34 in FIG. 13).

The first period is a period in which the predicted sugar content and the predicted acidity (the plurality of types of predicted quality values) satisfy a predetermined condition. The predetermined condition is a condition for quality to be satisfied by the fruit items at the time of harvest.

The predetermined condition includes a condition for the predicted sugar content and a condition for the predicted acidity.

The condition for the predicted sugar content is a condition in which the sugar content is equal to or more than a first threshold value Th1 (see FIG. 15).

The condition for the predicted acidity is a condition in which the acidity is equal to or more than a second threshold value Th2 (see FIG. 15).

The first threshold value Th1 and the second threshold value Th2 are set to values necessary for grapes being a raw material for wine.

In the first period, both the predicted sugar content and the predicted acidity satisfy the predetermined condition.

Thus, in FIG. 15, the first period is a period in which two periods overlap, the two periods being a period in which the sugar content is equal to or more than the first threshold value Th1 in the prediction curve L10 of the sugar content, and a period in which the acidity is equal to or more than the second threshold value Th2 in the prediction curve L20 of the acidity.

As indicated by the approximate curve L11 and the prediction curve L10 in FIG. 15, the sugar content has a tendency to gradually increase in value over days.

Thus, the period in which the sugar content is equal to or more than the first threshold value Th1 in the prediction curve L10 of the sugar content is a period on and after point P1 on the prediction curve L10. The point P1 is a point on which the first threshold value Th1 is reached on the prediction curve L10.

As indicated by the approximate curve L21 and the prediction curve L20 in FIG. 15, the acidity has a tendency to gradually decrease in value over days.

Thus, the period in which the acidity is equal to or more than the second threshold value Th2 in the prediction curve L20 of the acidity is a period on and before point P2 on the prediction curve L20. The point P2 is a point on which the second threshold value Th2 is reached on the prediction curve L20.

As described so far, the sugar content and the acidity are different from each other in increasing and decreasing trends over days.

Hence, the first period in which both the sugar content and the acidity satisfy the predetermined condition is a period from Day d1 to Day d2. Day d1 is a day corresponding to the point P1. Day d2 is a day corresponding to the point P2.

That is, in the present embodiment, the first period is a period from Day d1 to Day d2.

In the foregoing manner, the processing unit 32 obtains the first period based on the prediction curve L10 of the sugar content and the prediction curve L20 of the acidity.

When the first period is absent, the processing unit 32 outputs the prediction curve L10 and the prediction curve L20 to the operator 14 through the management terminal 10.

When the first period is absent, the predicted period cannot be obtained. However, the prediction curve L10 and the prediction curve L20 are output, which makes it possible to present, to the operator 14, information necessary when the operator 14 specifies the predicted period.

The second period is a period in which a weather condition is determined as being harvestable based on a predicted precipitation. More specifically, the second period is a period determined based on a comparison result between the predicted precipitation and a predetermined threshold value. In the present embodiment, the predetermined threshold value is set such that a predicted precipitation per day is 20 mm.

The processing unit 32 determines a day on which the predicted precipitation per day is 20 mm or less as a harvestable weather condition.

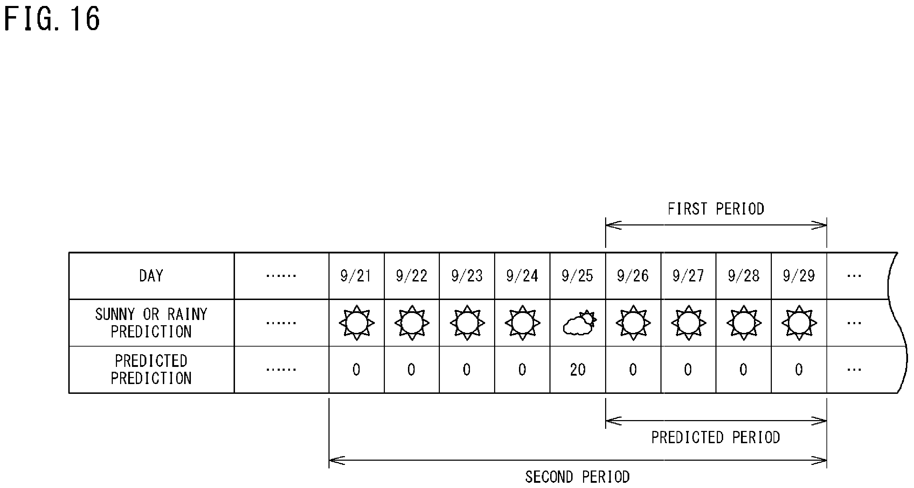

FIG. 16 is a diagram illustrating a first example of the sunny or rainy predictions and the predicted precipitations contained in the environmental prediction information.

FIG. 16 illustrates sunny or rainy predictions and predicted precipitations in a period from September 21 to September 29, which is 9 days ahead.

The sunny or rainy predictions and the predicted precipitations illustrated in FIG. 16 are as follows.

September 21 to September 24: Sunny or rainy prediction is "sunny", predicted precipitation is 0 mm.

September 25: Sunny or rainy prediction is "Cloudy, with occasional sunshine", predicted precipitation is 20 mm.

September 26 to September 29: Sunny or rainy prediction is "sunny", predicted precipitation is 0 mm.

In this case, the predicted precipitation for 9 days from September 21 to September 29 are 20 mm or less. Thus, the processing unit 32 determines 9 days from September 21 to September 29 as the second period.

In the foregoing manner, the processing unit 32 obtains the first period and the second period (step S34 in FIG. 13).

Next, the processing unit 32 obtains the predicted period based on the first period and the second period (step S35 in FIG. 13).

In principle, the processing unit 32 sets, as the predicted period, an overlapping period in which the first period and the second period overlap.

In FIG. 16, for example, it is assumed that the first period is from September 26 to September 29.

In this case, the entire first period overlaps with the second period. Thus, the entire first period is the overlapping period. Thus, the processing unit 32 sets the period from September 26 to September 29 as the predicted period.

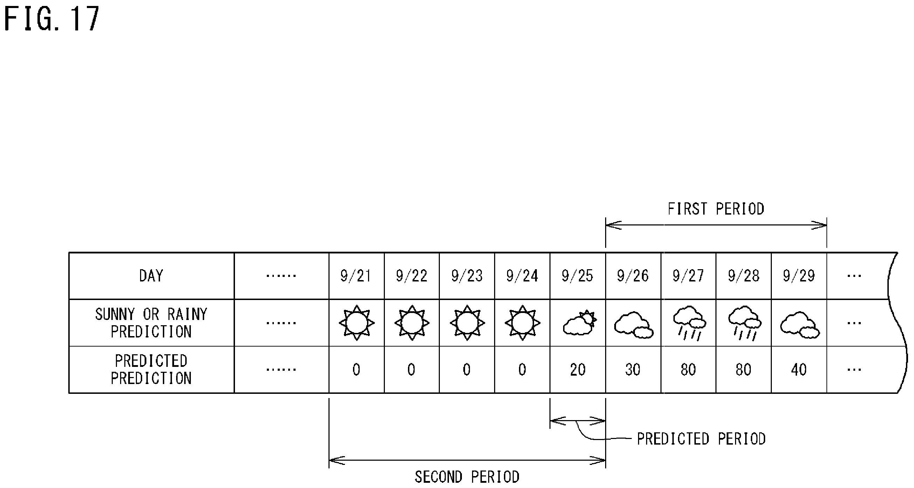

FIG. 17 is a diagram illustrating a second example of the sunny or rainy predictions and the predicted precipitations included in the environmental prediction information.

The sunny or rainy predictions and the predicted precipitations illustrated in FIG. 17 are as follows.

September 21 to September 24: Sunny or rainy prediction is "sunny", predicted precipitation is 0 mm.

September 25: Sunny or rainy prediction is "Cloudy, with occasional sunshine", predicted precipitation is 20 mm.

September 26: Sunny or rainy prediction is "Cloudy, with occasional rain", predicted precipitation is 30 mm.

September 27 to September 28: Sunny or rainy prediction is "rain", predicted precipitation is 80 mm.

September 29: Sunny or rainy prediction is "Cloudy, with occasional rain", predicted precipitation is 40 mm.

In this case, the processing unit 32 determines 5 days from September 21 to September 25 as the second period.

In FIG. 17, it is assumed that the first period is from September 26 to September 29.

In this case, the overlapping period is absent between the first period and the second period.

When the overlapping period is absent between the first period and the second period and the second period is present before the first period, the processing unit 32 sets, as the predicted period, a day closest to the first period in the second period.

Thus, in the case of FIG. 17, the processing unit 32 sets September 25 as the predicted period.

In the present embodiment, when the overlapping period is absent and the second period is present before the first period, the day closest to the first period in the second period is set as the predicted period, so that the predicted period can be set at a timing as close as possible to when a necessary quality condition is met among harvestable weather conditions.

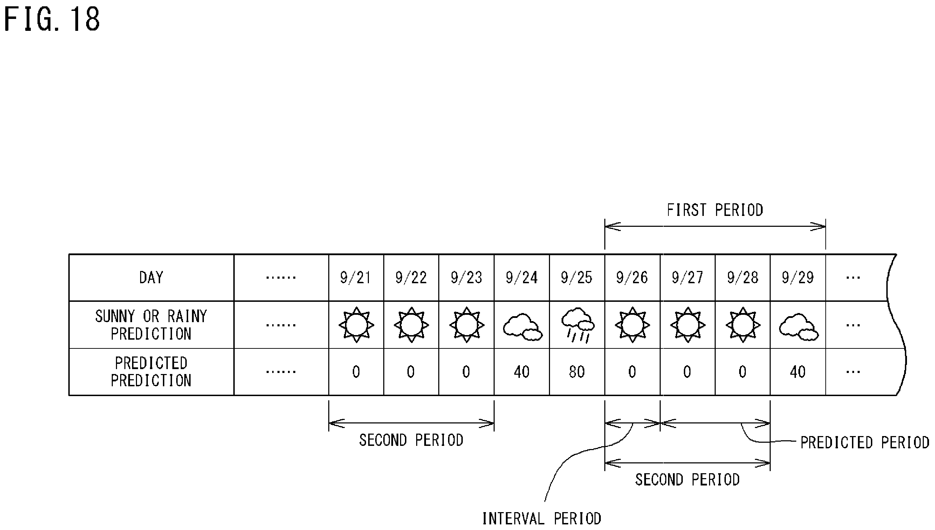

FIG. 18 is a diagram illustrating a third example of the sunny or rainy predictions and the predicted precipitations included in the environmental prediction information.

The sunny or rainy predictions and the predicted precipitations illustrated in FIG. 18 are as follows.

September 21 to September 23: Sunny or rainy prediction is "sunny", predicted precipitation is 0 mm.

September 24: Sunny or rainy prediction is "Cloudy, with occasional rain", predicted precipitation is 40 mm.

September 25: Sunny or rainy prediction is "rain", predicted precipitation is 80 mm.

September 26 to September 28: Sunny or rainy prediction is "sunny", predicted precipitation is 0 mm.

September 29: Sunny or rainy prediction is "Cloudy, with occasional rain", predicted precipitation is 40 mm.

In this case, the processing unit 32 determines, as the second period, 3 days from September 21 to September 23 and 3 days from September 26 to September 28.

In FIG. 17, it is assumed that the first period is from September 26 to September 29.

In this case, 3 days from September 26 to September 28 are the overlapping period.

Here, when a period that is not the second period is present immediately before the overlapping period, the processing unit 32 performs processing of providing an interval of at least one day between the period that is not the second period and the predicted period.

In FIG. 18, a period, from September 24 to September 25, that is immediately before the overlapping period is a period that is not the second period. Thus, the processing unit 32 sets September 27 and September 28 as the predicted period among the 3 days from September 24 to September 28 being the overlapping period. This results in that September 26 is an interval period.

Immediately after the period that is not the second period, the state of the field F is not favorable due to rain in some cases.

In this respect, in the present embodiment, since the interval period of at least one day is provided between the period that is not the second period and the predicted period as described above, the predicted period can be set while a timing at which the state of the field F is not favorable is avoided.

The processing unit 32 after obtaining the predicted period provides information indicating the predicted period to the management terminal 10 as necessary, and outputs the predicted period as an optimal harvest time of the fruit items to the operator 14 through the management terminal 10 (step S36 in FIG. 13).

The processing unit 32 after outputting the predicted period returns to the flowchart illustrated in FIG. 6 and repeats similar processing anew.

The processing unit 32 performs the quality value acquisition processing and the prediction processing each time quality measurement in the field F is performed.

As described above, the processing (third processing) of obtaining the predicted period based on the two pieces of time-series data (time-series data on the sugar content and time-series data on the acidity) includes the processing of obtaining the predicted sugar content and the predicted acidity (the plurality of types of predicted quality values), the processing of acquiring the environmental prediction information, and the processing of obtaining the predicted period based on the environmental prediction information and the plurality of types of predicted quality values.

According to the above configuration, it is possible to perform prediction of future quality values using the time-series data on the sugar content and the time-series data on the acidity (the plurality of pieces of time-series data), and to obtain the predicted period predicted as the optimal harvest time based on those predicted quality values.

As a result, the predicted period can be output as a prediction result for the optimal harvest time of the fruit items.

In addition, the prediction processing of the present embodiment includes the processing of obtaining the prediction curve L10 of the sugar content and the prediction curve L20 of the acidity (predicted sugar content and predicted acidity) based on the time-series data on the sugar content and the time-series data on the acidity (step S32 in FIG. 13), the processing of obtaining the environmental prediction information indicating an environmental prediction for the field F (step S33 in FIG. 13), and the processing of obtaining the predicted period based on the environmental prediction information, the predicted sugar content, and the predicted acidity.

In this case, it is possible to obtain the predicted period taking into account the environmental prediction information on the field F, in addition to the predicted quality values of the fruit items.

The processing of obtaining the predicted period based on the environmental prediction information, the predicted sugar content, and the predicted acidity includes the processing of obtaining the first period in which the predicted sugar content and the predicted acidity satisfy the predetermined condition, and also obtaining the second period in which the weather condition is determined as being harvestable based on the comparison result between the predicted precipitation and the predetermined threshold value (step S34 in FIG. 13), and the processing of obtaining the predicted period based on the first period and the second period (step S35 in FIG. 13).

This makes it possible to appropriately obtain the predicted period according to a relation between an appropriate period in view of the quality values and an appropriate period in view of the weather conditions.

### [Others]

The embodiments disclosed herein should be construed as illustrative in all respects and not restrictive.

For example, in the above embodiment, the case where the environmental prediction information includes the sunny or rainy predictions and the predicted precipitations is exemplified. However, it is also possible to use disease risk information about a fruit disease as the environmental prediction information.

In a case where the disease risk information is used as the environmental prediction information, a disease prediction model that outputs the disease risk information is stored in the storage unit 34 of the management server 8.

As this disease prediction model, for example, a Goidanich model for downy mildew is employed. The Goidanich model is a model for predicting the growth of *Plasmopara viticola*, and is often used for disease prediction.

The disease prediction model is configured to output, in percentage, a risk (disease risk information) of causing a disease due to *Plasmopara viticola* when a temperature, humidity, and a precipitation are provided. A risk value expressed in percentage is used as a predicted value indicating a predicted environmental state.

The processing unit 32 may obtain a predicted period using the disease risk information instead of the sunny or rainy predictions and the predicted precipitations.

In this case, when acquiring the environmental prediction information (step S33 in FIG. 13), the processing unit 32 of the management server 8 accesses the weather information server 7 and acquires the weather prediction information. As described above, the weather prediction information includes the sunny or rainy predictions, the predicted precipitations, the predicted temperatures, and the predicted humidity in a period of about 1 week to 10 days.

The processing unit 32 provides the disease prediction model with the predicted precipitations, the predicted temperatures, and the predicted humidity contained in the weather prediction information, and causes the disease prediction model to output the disease risk information.

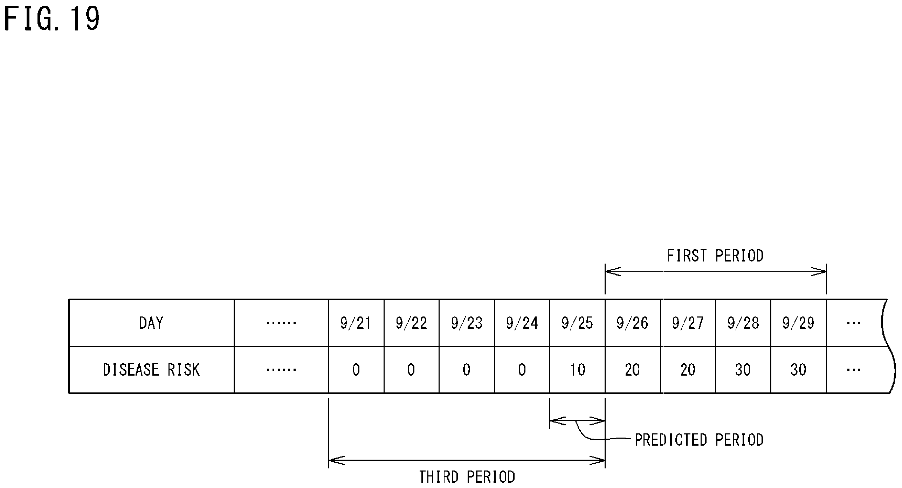

FIG. 19 is a diagram illustrating an example of a disease risk contained in the environmental prediction information.

FIG. 19 indicates disease risk information in a period from September 21 to September 29, which is 9 days ahead.

Here, the processing unit 32 determines a day on which the disease risk information indicates less than 20% as a period in which there is no problem with a disease (third period), and determines a day on which the disease risk information indicates 20% or more as a period in which there is a problem with the disease.

In the case of FIG. 19, the disease risk information for 5 days from September 21 to September 25 indicates 10% or less. Thus, the processing unit 32 determines 5 days from September 21 to September 25 as the third period. In addition, the processing unit 32 determines 4 days from September 26 to September 29 as a period in which there is a problem with the disease.

The processing unit 32 performs similar processing to the determination using the first period and the second period in the above embodiment. That is, in principle, the processing unit 32 sets, as the predicted period, the overlapping period in which the first period and the third period overlap. When the overlapping period is absent between the first period and the third period and the third period is present before the first period, the processing unit 32 sets, as the predicted period, a day closest to the first period in the third period.

In FIG. 19, assuming that the first period is from September 26 to September 29, the processing unit 32 sets September 25 as the predicted period.

In this manner, it is also possible to obtain prediction information using the disease risk information about a disease of the fruit items as the environmental prediction information.

In the above embodiment, the case where the prediction processing is performed based on the two types of the measured quality values (sugar content and acidity) obtained by the quality value acquisition processing, is exemplified; however, it suffices that the prediction processing is performed using at least two types of the measured quality values, and the pH and the polyphenol content ratio as well as the sugar content and the acidity can also be used for the prediction processing.

As described in the present embodiment, it is particularly preferable to use the sugar content and the acidity as the measured quality values used for the prediction processing.

In the quality value acquisition processing in the above embodiment, the case where the measured quality values are obtained based on the first quality values of the first measurement device 2 (outputs of the first measurement device) and the second quality values based on the outputs of the second measurement device 4, is exemplified; however, the second quality values from the second measurement device 4 may be used as the measured quality values. In other words, the prediction processing may be performed using the second quality values from the second measurement device 4. In this case, it is not necessary to perform the quality measurement work by the first measurement device 2, and the quality measurement for the fruit items K of some or all of the plurality of plants T is performed by the second measurement device 4, and the prediction processing can be performed using the obtained second quality values.

Further, when the prediction processing is performed using the second quality values from the second measurement device 4, the second quality values may be obtained with second calibration curve data C2 adjusted according to a season or a place.

In this case, the accuracy in the quality measurement can be further enhanced.

As a method for acquiring the quality values of the fruit items, in the present embodiment, the case where the spectroscopic analysis using the near-infrared light is used is exemplified; however, the quality values of the fruit items may be acquired by another method as long as similar quality values can be acquired.

The scope of the present invention is defined not by the above meaning but by the claims, and is intended to include meanings equivalent to the claims and all modifications within the scope.

### REFERENCE SIGNS LIST

1 harvest support system
2 first measurement device (first measurement unit)
4 second measurement device (second measurement unit)
5 measurement device
6 agricultural machine
6a in-vehicle network
7 weather information server
8 management server (processing device)
10 management terminal
12 manipulator
14 operator
18 control device
19 input-output device
20 communication device
22 first measurement head
24 first control unit
26 second measurement head
26a light projection unit
26b light reception unit
26c head body
26c1 annular end surface
26c2 hole
27 light source
28 spectrometer
30 second control unit
32 processing unit
32a quality value acquisition processing
32b prediction processing
34 storage unit
36 communication device
40 quality value database
40a sugar content database
40b acidity database
40c pH database
40d polyphenol database
A imaging region
BS radio base station
C1, C11, C12, C13, C14 first calibration curve data
C2, C21, C22, C23, C24 second calibration curve data
D1 first spacing
D2 second spacing
F field
K fruit item
KT target fruit item
KR reference fruit item
L line chart
L10 prediction curve
L11 approximate curve
L20 prediction curve
L21 approximate curve
NW public network
S, S1, S2, S3, S4 scaling data
T plant
d0, d1, d2 day
k1 piece of fruit

## Claims

1. A harvest support system comprising:
a measurement device that measures quality of a fruit item cultivated in a field; and
a processing device, wherein
the processing device includes a processing unit that executes
first processing of acquiring a plurality of types of quality values based on an output of the measurement device,
second processing of acquiring a plurality of pieces of time-series data in which the plurality of types of quality values are accumulated, respectively, in time series, and
third processing of obtaining a predicted period predicted to be an optimal harvest time of the fruit item based on the plurality of pieces of time-series data.

2. The harvest support system according to claim 1, wherein the third processing includes
processing of obtaining predicted quality values of the plurality of types of quality values, respectively, based on the plurality of pieces of time-series data,
processing of acquiring environmental prediction information indicating an environmental prediction for the field, and
processing of obtaining the predicted period based on the environmental prediction information and the plurality of predicted quality values.

3. The harvest support system according to claim 2, wherein
the environmental prediction information includes a predicted value indicating a predicted environmental state, and
the processing of obtaining the predicted period includes
processing of obtaining a first period in which the plurality of predicted quality values satisfy a predetermined condition, and also obtaining a second period in which an environmental state is determined as being harvestable based on a comparison result between the predicted value and a predetermined threshold value, and
processing of obtaining the predicted period based on the first period and the second period.

4. The harvest support system according to claim 3, wherein the processing of obtaining the predicted period based on the first period and the second period includes processing of setting, as the predicted period, an overlapping period in which the first period and the second period overlap.

5. The harvest support system according to claim 4, wherein the processing of obtaining the predicted period based on the first period and the second period further includes processing of, when a period that is not the second period is present immediately before the overlapping period, providing an interval of at least one day between the period that is not the second period and the predicted period.

6. The harvest support system according to any one of claims 2 to 5, wherein the environmental prediction information includes at least one of weather information and disease risk information about a disease of the fruit item.

7. The harvest support system according to any one of claims 3 to 6, wherein the processing of obtaining the predicted period based on the first period and the second period includes processing of, when the overlapping period in which the first period and the second period overlap is absent, setting, as the predicted period, a day closest to the first period in the second period.

8. The harvest support system according to any one of claims 3 to 7, wherein the processing of obtaining the predicted period further includes processing of, when the first period is absent, outputting the plurality of predicted quality values to an outside.

9. The harvest support system according to any one of claims 1 to 8, wherein
the measurement device includes
a first measurement unit that measures the quality of the fruit item, and
a second measurement unit that measures the quality of the fruit item with a different configuration from that of the first measurement unit, and
the first processing includes processing of obtaining the plurality of types of quality values when the quality of the fruit item is measured by the first measurement unit based on scaling data indicating correlations between an output of the first measurement unit and a plurality of reference quality values based on an output of the second measurement unit.

10. The harvest support system according to any one of claims 1 to 9, wherein the fruit item includes a grape.

11. The harvest support system according to any one of claims 1 to 10, wherein the plurality of types of quality values include at least two of sugar content, acidity, pH, and polyphenol content ratio.

12. A processing device comprising a processing unit that executes
processing of acquiring a plurality of types of quality values based on outputs of a measurement device that measures quality of a fruit item cultivated in a field,
processing of acquiring a plurality of pieces of time-series data in which the plurality of types of quality values are accumulated, respectively, in time series, and
processing of obtaining a predicted period predicted to be an optimal harvest time of the fruit item based on the plurality of pieces of time-series data.

13. A computer program causing a computer to execute processing of supporting harvest of a fruit item cultivated in a field, the computer program causing the computer to execute
a step of acquiring a plurality of types of quality values based on outputs of a measurement device that measures quality of the fruit item,
a step of acquiring a plurality of pieces of time-series data in which the plurality of types of quality values are accumulated, respectively, in time series, and
a step of obtaining a predicted period predicted to be an optimal harvest time of the fruit item based on the plurality of pieces of time-series data.
